# EUROPÄISCHE PATENTSCHRIFT

(11) **EP 2 936 660 B1**
(45) Veröffentlichungstag und Bekanntmachung des Hinweises auf die Patenterteilung: **17.03.2021**
(21) Anmeldenummer: 13792258.9
(22) Anmeldetag: 11.11.2013
(51) Int. Cl.: H02K 11/21

(54) **ELEKTROMOTOR MIT LÜFTERHAUBE UND SENSOR**
ELECTRIC MOTOR WITH FAN COWL AND SENSOR
MOTEUR ÉLECTRIQUE ÉQUIPÉ D'UNE ENVELOPPE DE VENTILATEUR ET CAPTEUR

(30) Priorität: 19.12.2012 DE 102012024811
(43) Veröffentlichungstag der Anmeldung: 28.10.2015
(73) Patentinhaber: SEW-EURODRIVE GmbH & Co. KG, 76646 Bruchsal (DE)
(72) Erfinder: PFANN, Jochen, 76149 Karlsruhe (DE); DREXLER, Mario, 76698 Ubstadt-Weiher (DE)
(86) Internationale Anmeldenummer: PCT/EP2013/003397
(87) Internationale Veröffentlichungsnummer: WO 2014/094940

(56) Entgegenhaltungen:
- EP-A1- 2 113 989
- DE-A1-102006 011 080
- DE-A1-102008 059 092

## Beschreibung

Die Erfindung betrifft einen Elektromotor mit Lüfterhaube und Sensor.

Es ist allgemein bekannt, dass ein Elektromotor mit Lüfterhaube und Sensor zusammenmontierbar ist.

**Aus der** EP 2 113 989 A1 **ist eine Drehmomentstütze zur Befestigung des Gehäuses eines Drehgebers an einem Elektromotor bekannt.**

**Aus der** DE 10 2008 059 092 A1 **ist ein Elektromotor mit Rotorwelle und Gehäuseteil, an welchem ein Sensorgehäuse über ein Abstützteil abgestützt ist.**

**Aus der** DE 10 2006 011 080 A1 **ist ein Elektromotor mit Rotorwelle und Winkelsensor bekannt, wobei Rotorwelle und Winkelsensor mit einer ersten und mit einer weiteren Verbindung verbunden sind.**

Der Erfindung liegt daher die Aufgabe zugrunde, einen Winkelsensor an einem Elektromotor mit Lüfterhaube vorzusehen.

Erfindungsgemäß wird die Aufgabe bei dem Elektromotor nach den in Anspruch 1 angegebenen Merkmalen gelöst.

Wichtige Merkmale der Erfindung bei dem Elektromotor mit Lüfterhaube und Sensor sind, dass der Sensor eine Welle aufweist und ein Sensorgehäuse,
wobei die Lüfterhaube Ausnehmungen aufweist,
wobei die Welle des Sensors mit der Rotorwelle des Elektromotors drehfest verbunden ist,
**wobei** ein Drehmomentstützteil eine Befestigungslasche aufweist, die am Sensorgehäuse oder einem mit diesem schraubverbundenen weiteren Gehäuseteil, insbesondere Adaptergehäuse, verbunden ist, insbesondere schraubverbunden ist,
wobei das Drehmomentstützteil einen Streifenabschnitt aufweist, der an seinem ersten Endbereich mit der Befestigungslasche verbunden ist und an seinem anderen Endbereich mit einem Verformungsabschnitt verbunden ist,
wobei das Drehmomentstützteil einen Versteifungsring aufweist, an welchem ein weiterer Streifenabschnitt mit seinem ersten Endbereich verbunden ist, wobei an dem weiteren Streifenabschnitt zumindest eine Lasche angeordnet ist und der weitere Streifenabschnitt an seinem anderen Endbereich ebenfalls mit dem Verformungsabschnitt verbunden ist,
- wobei der Verformungsabschnitt, insbesondere im montierten Zustand, derart elastisch verformt ist, dass eine axial gerichtete elastische Kraft die Lasche zu den und/oder in die Ausnehmungen drückt,
- und/oder wobei vor Montage des Drehmomentstützteils der Radialabstand der Befestigungslasche insbesondere der Radialabstand zur Versteifungsringachse, sich unterscheidet vom Radialabstand, insbesondere vom Radialabstand zur Versteifungsringachse, der Befestigungslasche im montierten Zustand des Drehmomentstützteils so dass im montierten Zustand des Drehmomentstützteils eine axial gerichtete elastische Kraft die Lasche zu den und/oder in die Ausnehmungen drückt.

Von Vorteil ist dabei, dass eine Vorspannung vorhanden ist, so dass die Laschen in die Ausnehmungen gedrückt werden und somit die Drehmomentübertragung mittels des Drehmomentstützteils wirksam ist. Hierzu ist die in Umfangsrichtung steife Ausführung des Drehmomentstützteils vorteilhaft, wobei die weniger steife Ausführung in axialer Richtung die Verformbarkeit ermöglicht und somit das elastisch bedingte Andrücken ermöglicht.

Auch wenn also die Lüfterhaube in axialer Richtung oder in radialer Richtung schwingt, bleibt die Drehmomentstützfunktion erhalten, da die Lüfterhaube und das Drehmomentstützteil in Umfangsrichtung viel steifer sind als in axialer oder radialer Richtung.

Der Versteifungsring trägt besonders zur Erlangung dieser Steifigkeit bei.

Da das Drehmomentstützteil aus dünnem Blech gefertigt ist, dessen Wanddicke im Wesentlichen in axialer Richtung vorgesehen ist mit Ausnahme des Verformungsabschnitts, ist ein Verformen in axialer Richtung leicht möglich.

Bei einer vorteilhaften Ausgestaltung bilden die Ausnehmungen der Lüfterhaube ein Gitter, insbesondere also ein Lüfterhaubengitter,

insbesondere wobei das Lüfterhaubengitter die Luftzufuhr zu einem von der Lüfterhaube umgebenen, mit der Rotorwelle des Motors drehfest verbundenen Lüfters ermöglicht,
wobei das Gitter eben angeordnet ist, insbesondere an einer einzigen axialen Position und/oder sich erstreckt in radiale Richtung und in Umfangsrichtung. Von Vorteil ist dabei, dass die Steifigkeit in Umfangsrichtung höher ist als in axialer und radialer Richtung.

Bei einer vorteilhaften Ausgestaltung ist die Welle des Sensors mit der Rotorwelle mittels einer mittig zur Rotorwellenachse angeordneten Schraube und/oder mittels einer Spreizwellenverbindung verbunden. Von Vorteil ist dabei, dass eine einfache spielfreie Verbindung vorsehbar ist.

Bei einer vorteilhaften Ausgestaltung ist im montierten Zustand die Versteifungsringachse parallel zur Rotorwellenachse. Von Vorteil ist dabei, dass in Umfangsrichtung eine sehr viel höhere Steifigkeit als in axialer Richtung vorhanden ist.

Bei einer vorteilhaften Ausgestaltung ragt das Sensorgehäuse oder das weitere Gehäuseteil durch das Ringloch des Versteifungsrings hindurch. Von Vorteil ist dabei, dass der Versteifungsring radial beabstandet vom Sensorgehäuse oder Gehäuseteil ist. Somit wird das Andrücken der Laschen ausschließlich durch die Position der Befestigungslaschen bestimmt und nicht durch weitere Nebenbedingungen.

Bei einer vorteilhaften Ausgestaltung ist zwischen dem Streifenabschnitt und dem weiteren Streifenabschnitt zumindest ein Bereich eines Dämpfungsteils angeordnet, insbesondere wobei der Bereich den Streifenabschnitt und den weiteren Streifenabschnitt berührt,
insbesondere wobei der Bereich konisch ausgeführt ist oder als konvexer Rotationskörperabschnitt. Von Vorteil ist dabei, dass eine Dämpfung von Schwingungen erreichbar ist, die vom Motor über die Lüfterhaube zum Sensor sich ausbreiten. Insbesondere werden Schwingungen, welche sich vom weiteren Streifenabschnitt über den Verformungsabschnitt zum Streifenabschnitt ausbreiten, abgedämpft.

Bei einer vorteilhaften Ausgestaltung weist das Dämpfungsteil einen Abschnitt auf, der vom weiteren Streifenabschnitt in eine Ausnehmung der Lüfterhaube, insbesondere in eine Gitteröffnung des Lüfterhaubengitters, zumindest teilweise gedrückt wird,
insbesondere wobei der Abschnitt konisch ausgeführt ist oder als konvexer Rotationskörperabschnitt. Von Vorteil ist dabei, dass ebenso eine verbesserte Schwingungsdämpfung erzielt wird.

Bei einer vorteilhaften Ausgestaltung ist das Drehmomentstützteil als Stanz-Biegeteil hergestellt, insbesondere aus Metallblech, insbesondere Aluminiumblech oder Stahlblech. Von Vorteil ist dabei, dass eine einfache kostengünstige Fertigung ausführbar ist.

Bei einer vorteilhaften Ausgestaltung sind am Versteifungsring zwei oder mehrere weitere Streifenabschnitte verbunden, die über einen jeweiligen Verformungsabschnitt mit einem jeweiligen Streifenabschnitt verbunden sind, der mit einer Befestigungslasche verbunden ist, die am Sensorgehäuse oder dem weiteren Gehäuseteil schraubverbunden ist,
wobei jeder der weiteren Streifenabschnitte jeweils zumindest eine Lasche aufweist, die durch die elastische Verformung des Verformungsabschnitts in eine jeweilige Ausnehmung gedrückt wird,
insbesondere wobei zwischen jedem der weiteren Streifenabschnitte und dem entsprechend über den jeweiligen Verformungsabschnitt verbundenen Streifenabschnitt ein jeweiliges Dämpfungsteil angeordnet ist. Von Vorteil ist dabei, dass eine entsprechend der Anzahl der Streifenabschnitte erhöhte Drehmomentstützfunktion erreichbar ist.

Bei einer vorteilhaften Ausgestaltung ist zwischen dem jeweiligen Streifenabschnitt und dem jeweiligen weiteren Streifenabschnitt zumindest ein Bereich des jeweiligen Dämpfungsteils angeordnet, insbesondere wobei der Bereich den Streifenabschnitt und den weiteren Streifenabschnitt berührt,
insbesondere wobei der Bereich konisch ausgeführt ist oder als konvexer Rotationskörperabschnitt. Von Vorteil ist dabei, dass Toleranzen kompensierbar sind, indem die Eintauchtiefe des Bereichs in die Ausnehmung entsprechend verändert ist.

Bei einer vorteilhaften Ausgestaltung ist das jeweilige Dämpfungsteil auf kleinerem Radialabstand angeordnet als der Verformungsabschnitt. Von Vorteil ist dabei, dass ein Abdämpfen der über dem Verformungsabschnitt sich ausbreitenden Schwingungen ermöglicht ist.

Bei einer vorteilhaften Ausgestaltung ist der jeweilige Verformungsabschnitt in axialer und radialer Richtung gekrümmt, insbesondere kreisbogenartig gekrümmt, ausgeführt, insbesondere C-förmig. Von Vorteil ist dabei, dass eine Vorspannung in axialer Richtung einfach erzeugbar ist.

Bei einer vorteilhaften Ausgestaltung sind der jeweilige Streifenabschnitt und der jeweilige weitere Streifenabschnitt axial beabstandet voneinander,
insbesondere wobei beide sich jeweils radial und in Umfangsrichtung erstrecken. Von Vorteil ist dabei, dass durch Längendimensionierung der Streifenabschnitte entsprechende Vorspannungskräfte mit dem Verformungsabschnitt erzeugbar sind.

Bei einer vorteilhaften Ausgestaltung ist die Welle über eine Adapterwelle, mit welcher sie drehfest verbunden ist, mit der Rotorwelle drehfest verbunden,
wobei die Befestigungslaschen am weiteren Gehäuseteil, also Adaptergehäuse, schraubverbunden sind. Von Vorteil ist dabei, dass ein Adapter zwischen den Sensor und den Motor anordenbar ist und somit ein Ausgleich von Wellenachsfehlorientierungen erreichbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

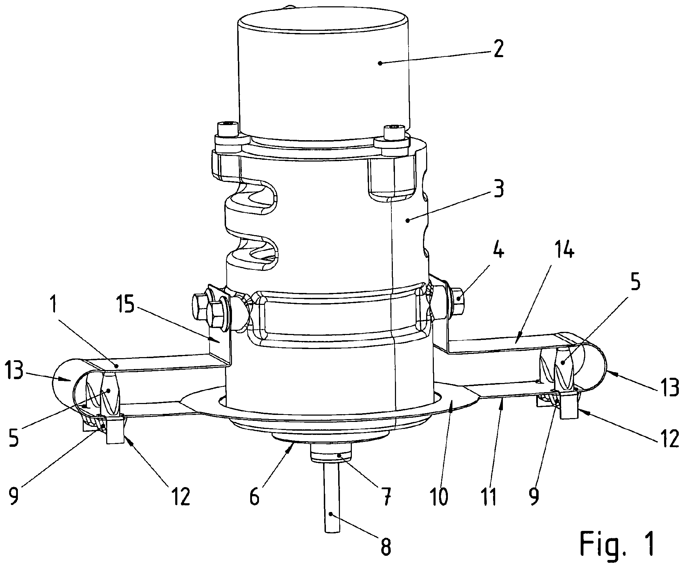

In der Figur 1 ist ein schematischer Aufbau einer erfindungsgemäßen Sensoranordnung zur Detektion der Winkelstellung der Rotorwelle eines Elektromotors gezeigt, wobei ein Drehmomentstützteil 1 gezeigt ist.

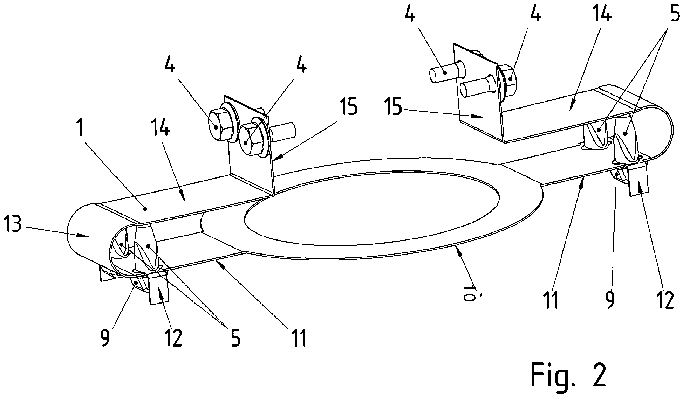

In der Figur 2 ist das Drehmomentstützteil 1 mit Dämpfungsteil 5 und Befestigungsschraubteilen 4 gezeigt.

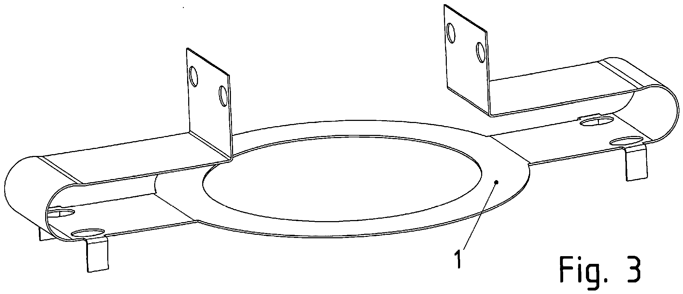

In der Figur 3 ist das Drehmomentstützteil 1 ohne Dämpfungsteil 5 und ohne Befestigungsschraubteile 4 gezeigt.

Wie in den Figuren gezeigt, ist das Sensorgehäuse 2 mit dem Adaptergehäuse 3 schraubverbunden. In dem Sensorgehäuse 2 ist eine Sensorwelle drehbar gelagert, die drehfest mit einer Adapterwelle 7 verbunden ist, welche drehbar im Adaptergehäuse 3 gelagert ist.

Die Adapterwelle 7 ist drehfest mit der Rotorwelle des Elektromotors verbunden. Hierzu ist eine mittig durch die Adapterwelle 7 durchgehende Schraube 8 in eine mittig in der Rotorwelle angeordnete Gewindebohrung eingeschraubt. Die Rotorwelle ist drehbar gelagert in einem Statorgehäuseteil, mit welchem eine Lüfterhaube schraubverbunden ist. Die Lüfterhaube umgibt zumindest teilweise einen Lüfter, der drehfest mit der Rotorwelle verbunden ist und axial, also in Rotorwellenachsrichtung, zwischen dem Sensor beziehungswiese Adapter und dem Rotor des Elektromotors angeordnet ist.

Daher wird das Drehmomentstützteil 1 zwischen dem Adaptergehäuse und der Lüfterhaube angeordnet. Hierzu weist das Drehmomentstützteil 1 Befestigungslaschen 15 auf, welche mit jeweils zwei Schrauben 4 am Adaptergehäuse 3 angeschraubt sind.

Jede Befestigungslasche 15 ist über einen jeweiligen, sich radial erstreckenden Streifenabschnitt 14 mit einem radial und axial sich erstreckenden Verformungsabschnitt 13 verbunden, der wiederum mit einem weiteren sich radial erstreckenden Streifenabschnitt 11 verbunden ist.

Die weiteren Streifenabschnitte 11 münden jeweils in den Versteifungsring 10, durch dessen Öffnung das Adaptergehäuse 3 hindurchragt.

An dem jeweiligen Streifenabschnitt 11 sind Laschen 12 angeordnet, die in axialer Richtung hervorstehen und in Gitteröffnungen der in den Figuren nicht gezeigten Lüfterhaube eingreifen. Die mit einem jeweiligen Streifenabschnitt 11 verbundenen Laschen 12 klemmen sich somit am Lüfterhaubengitter fest, sind also kraftschlüssig verbunden.

Der jeweilige Streifenabschnitt 14 ist axial weiter vom Motor entfernt als der jeweilige weitere Streifenabschnitt 11.

Die Adapterwelle 7 weist eine Wellenstufe 6 auf zur axialen Begrenzung bei der Schraubverbindung der Adapterwelle 7 mit der Rotorwelle.

Das Drehmomentstützteil 1 ist als Stanz-Biegeteil ausgeführt, so dass also die der jeweilige Versteifungsring 10, der jeweilige Streifenabschnitt 11, die jeweiligen Lasche 12, der jeweilige Verformungsabschnitt 13, der jeweilige Streifenabschnitt 14 und die jeweiligen Befestigungslaschen 15 zusammen einteilig, insbesondere einstückig, ausgeführt sind.

Das Lüfterhaubengitter überdeckt einen ebenen Bereich, also Flächenabschnitt, und befindet sich auf einer axialen Position. Der ebene Bereich erstreckt sich also nur in radialer Richtung und in Umfangsrichtung.

Somit sind auch die Laschen 12 vorzugsweise auf jeweils gleichem Radialabstand zur Rotorwellenachse und weisen somit dieselbe axiale Position auf, insbesondere überdecken sie die axiale Position des Lüfterhaubengitters.

Beim Montieren des Drehmomentstützteils 1, das vorzugsweise vor der Montage vorgespannt wird, an das Adaptergehäuse 3 wird die Drehmomentstützteil 1 verformt, so dass die Laschen 12 in die Ausnehmungen des Lüfterhaubengitters eingepresst werden.

Hierfür ist vor dem Verbinden mit dem Adaptergehäuse 3 die radiale Gesamtlänge des jeweiligen Streifenabschnitts 14 und der Hälfte des Abstandes zwischen den Befestigungslaschen 15, also dem Radialabstand der zugehörigen jeweiligen Befestigungslasche 15 kleiner als die radiale Gesamtlänge aus dem Außenradius des Versteifungsrings 10 und der radialen Länge des jeweiligen Streifenabschnitts 11.

Daher müssen die Befestigungslaschen 15 zum Anschrauben an das Adaptergehäuse 3 voneinander weiter weggedrückt werden. Somit werden die Laschen 12 in axialer Richtung zum Motor hingedrückt und greifen in die Ausnehmungen des Lüfterhaubengitters ein. Dabei werden auch die an der motorzugewandten Unterseite des Drehmomentstützteils 1 herausragenden konischen Abschnitte 9 des Dämpfungsteils 5 in Gitterausnehmungen gedrückt, wobei sie einen derart großen Durchmesser aufweisen, dass sie nur teilweise durch die jeweilige Ausnehmung des Lüfterhaubengitters hindurchragen.

Der andere axiale Endbereich des Dämpfungsteils 5 ragt jeweils durch eine Ausnehmung im Streifenabschnitt 11 hindurch und liegt am Streifenabschnitt 14 an.

Durch das Dämpfungsteil 5 werden also einerseits Schwingungen, welche von der Lüfterhaube her zum Streifenabschnitt 11 eindringen abgedämpft, insbesondere also axial und auch radial wirkende Schwingungen. Andererseits werden auch Schwingungen, welche vom Streifenteil 11 ins Streifenteil 14 sich ausbreiten, abgedämpft.

Auch in dem zwischen dem Streifenteil 11 und dem Streifenteil 14 angeordneten Abschnitt des Dämpfungsteils 5 ist dieses als konvexer Rotationskörperabschnitt ausgeführt.

Der Verformungsabschnitt 13 ist in radialer und axialer Richtung kreisbogenförmig gekrümmt. In Umfangsrichtung weist das Drehmomentstützteil 1 mit Ausnahme des Versteifungsrings eine konstante Dicke auf.

In Umfangsrichtung ist das Drehmomentstützteil als ebenes Blechstück ausgeführt. Somit ist eine hohe Steifigkeit in Umfangsrichtung bewirkt. In axialer Richtung ist das Drehmomentstützteil 1 hingegen viel weniger steif und wirkt daher als vorgespannte Feder, um die Laschen 12 und die konischen Abschnitte 9 in die Ausnehmungen des Lüfterhaubengitters zu drücken.

Da der Aufbau des Drehmomentstützteils 1 in spiegelsymmetrisch zu einer Ebene, die die Rotorwellenachse enthält und deren Normalenrichtung die beiden Verformungsabschnitte 13 verbindet, ist eine einfache Herstellung ermöglicht. Außerdem müssen die Gitteröffnungen nur entsprechend symmetrisch zur Rotorwellenachse angeordnet sein. Vorzugswiese bilden die Gitteröffnungen ein quadratisches Gitter, wobei jede Öffnung, also Ausnehmung, selbst wiederum quadratisch ist.

Wichtig ist auch, dass die Streifenabschnitte 11 und 14 zueinander axial beabstandet sind und in radialer Richtung einerseits und andererseits auch in Umfangsrichtung steifer sind als in axialer Richtung. Bei einer möglichst großen radialen Länge sind entsprechende Federkräfte erzeugbar, insbesondere bei kleiner Auslenkung pro radialen Längenabschnitt.

Der Versteifungsring 10 weist eine hohe Steifigkeit auf, insbesondere in Umfangsrichtung und in radialer Richtung. Aber auch in axialer Richtung ist er etwas steifer als die Streifenabschnitte 11 und 14.

Der Versteifungsring 10 ist von der Lüfterhaube vorzugswiese beabstandet.

Insgesamt ist das Drehmomentstützteil 1 also doppelkardanisch wirkend.

Bei einem weiteren erfindungsgemäßen Ausführungsbeispiel ist statt des konischen Abschnitts 9 ein ebenfalls konvexer Rotationskörperabschnitt eingesetzt.

Bei einem weiteren erfindungsgemäßen Ausführungsbeispiel ist kein Adapter vorhanden, sondern der Sensor direkt am Motor angebaut, so dass statt des Adaptergehäuses die Schrauben 4 direkt am Sensorgehäuse 2 angeordnet sind und die Rotorwelle direkt mit der Welle des Sensors verbunden ist.

### Bezugszeichenliste

1 Drehmomentstützteil
2 Sensorgehäuse
3 Adaptergehäuse
4 Schraubteil
5 Dämpfungsteil
6 Wellenstufe der Adapterwelle
7 Adapterwelle
8 Schraube
9 konischer Abschnitt des Dämpfungsteils
10 Versteifungsring
11 Streifenabschnitt
12 Lasche
13 Verformungsabschnitt
14 Streifenabschnitt
15 Befestigungslasche

## Patentansprüche

1. Elektromotor mit Lüfterhaube und Sensor,
wobei der Sensor eine Welle aufweist und ein Sensorgehäuse (2),
wobei die Lüfterhaube Ausnehmungen aufweist,
wobei die Welle des Sensors mit der Rotorwelle des Elektromotors drehfest verbunden ist,
**wobei** ein Drehmomentstützteil (1) eine Befestigungslasche (15) aufweist, die am Sensorgehäuse (2) oder einem mit diesem schraubverbundenen weiteren Gehäuseteil, insbesondere Adaptergehäuse (3), verbunden ist, insbesondere schraubverbunden ist,
wobei das Drehmomentstützteil (1) einen Streifenabschnitt (14) aufweist, der an seinem ersten Endbereich mit der Befestigungslasche (15) verbunden ist und an seinem anderen Endbereich mit einem Verformungsabschnitt (13) verbunden ist,
**dadurch gekennzeichnet, dass**
das Drehmomentstützteil (1) einen Versteifungsring (10) aufweist, an welchem ein weiterer Streifenabschnitt (11) mit seinem ersten Endbereich verbunden ist, wobei an dem weiteren Streifenabschnitt (11) zumindest eine Lasche (12) angeordnet ist und der weitere Streifenabschnitt (11) an seinem anderen Endbereich ebenfalls mit dem Verformungsabschnitt (13) verbunden ist,
**wobei das Sensorgehäuse** (2) **oder das weitere Gehäuseteil** (3) **durch das Ringloch des Versteifungsrings** (10) **hindurchragt,**
- wobei der Verformungsabschnitt (13), insbesondere im montierten Zustand, derart elastisch verformt ist, dass eine axial gerichtete elastische Kraft die Lasche (12) in die Ausnehmungen drückt,
- und/oder wobei sich vor Montage des Drehmomentstützteils (1) der Radialabstand der Befestigungslasche (15), insbesondere der Radialabstand zur Versteifungsringachse, vom Radialabstand der Befestigungslasche (15) im montierten Zustand des Drehmomentstützteils (1) unterscheidet, so dass im montierten Zustand des Drehmomentstützteils (1) eine axial gerichtete elastische Kraft die Lasche (12) in die Ausnehmungen drückt.

2. Elektromotor nach Anspruch 1,
**dadurch gekennzeichnet, dass**
die Ausnehmungen der Lüfterhaube ein Gitter bilden, insbesondere also ein Lüfterhaubengitter,
insbesondere wobei das Lüfterhaubengitter die Luftzufuhr zu einem von der Lüfterhaube umgebenen, mit der Rotorwelle des Motors drehfest verbundenen Lüfters ermöglicht,
wobei das Gitter eben angeordnet ist, insbesondere an einer einzigen axialen Position und/oder sich erstreckt in radiale Richtung und in Umfangsrichtung.

3. Elektromotor nach mindestens einem der vorangegangenen Ansprüche,
**dadurch gekennzeichnet, dass**
die Welle des Sensors mit der Rotorwelle mittels einer mittig zur Rotorwellenachse angeordneten Schraube und/oder mittels einer Spreizwellenverbindung verbunden ist.

4. Elektromotor nach mindestens einem der vorangegangenen Ansprüche,
**dadurch gekennzeichnet, dass**
im montierten Zustand die Versteifungsringachse parallel ist zur Rotorwellenachse.

5. Elektromotor nach mindestens einem der vorangegangenen Ansprüche,
**dadurch gekennzeichnet, dass**
zwischen dem Streifenabschnitt (14) und dem weiteren Streifenabschnitt (11) zumindest ein Bereich eines Dämpfungsteils (5) angeordnet ist, insbesondere wobei der Bereich den Streifenabschnitt (14) und den weiteren Streifenabschnitt (11) berührt,
insbesondere wobei der Bereich konisch ausgeführt ist oder als konvexer Rotationskörperabschnitt.

6. Elektromotor nach Anspruch 5,
**dadurch gekennzeichnet, dass**
das Dämpfungsteil (5) einen Abschnitt aufweist, der vom weiteren Streifenabschnitt (11) in eine Ausnehmung der Lüfterhaube, insbesondere in eine Gitteröffnung des Lüfterhaubengitters, zumindest teilweise gedrückt wird,
insbesondere wobei der Abschnitt konisch ausgeführt ist oder als konvexer Rotationskörperabschnitt.

7. Elektromotor nach mindestens einem der vorangegangenen Ansprüche,
**dadurch gekennzeichnet, dass**
das Drehmomentstützteil (1) als Stanz-Biegeteil hergestellt ist, insbesondere aus Metallblech insbesondere Aluminiumblech oder Stahlblech.

8. Elektromotor nach mindestens einem der vorangegangenen Ansprüche,
**dadurch gekennzeichnet, dass**
am Versteifungsring (10) zwei oder mehrere weitere Streifenabschnitte verbunden sind, die über einen jeweiligen Verformungsabschnitt (13) mit einem jeweiligen Streifenabschnitt verbunden sind, der mit einer Befestigungslasche (15) verbunden ist, die am Sensorgehäuse (2) oder dem weiteren Gehäuseteil schraubverbunden ist,
wobei jeder der weiteren Streifenabschnitte jeweils zumindest eine Lasche (12) aufweist, die durch die elastische Verformung des Verformungsabschnitts (13) in eine jeweilige Ausnehmung gedrückt wird,
insbesondere wobei zwischen jedem der weiteren Streifenabschnitte und dem entsprechend über den jeweiligen Verformungsabschnitt (13) verbundenen Streifenabschnitt ein jeweiliges Dämpfungsteil (5) angeordnet ist.

9. Elektromotor nach Anspruch 8,
**dadurch gekennzeichnet, dass**
zwischen dem jeweiligen Streifenabschnitt (14) und dem jeweiligen weiteren Streifenabschnitt (11) zumindest ein Bereich des jeweiligen Dämpfungsteils (5) angeordnet ist
insbesondere wobei der Bereich den Streifenabschnitt (14) und den weiteren Streifenabschnitt (11) berührt,
insbesondere wobei der Bereich konisch ausgeführt ist oder als konvexer Rotationskörperabschnitt.

10. Elektromotor nach Anspruch 9 oder 8,
**dadurch gekennzeichnet, dass**
das jeweilige Dämpfungsteil (5) auf kleinerem Radialabstand angeordnet ist als der Verformungsabschnitt (13).

11. Elektromotor nach mindestens einem der vorangegangenen Ansprüche,
**dadurch gekennzeichnet, dass**
der jeweilige Verformungsabschnitt (13) in axialer und radialer Richtung gekrümmt, insbesondere kreisbogenartig gekrümmt, ausgeführt ist, insbesondere C-förmig.

12. Elektromotor nach mindestens einem der vorangegangenen Ansprüche,
**dadurch gekennzeichnet, dass**
der jeweilige Streifenabschnitt (14) und der jeweilige weitere Streifenabschnitt (11) axial beabstandet voneinander sind,
insbesondere wobei beide sich jeweils radial und in Umfangsrichtung erstrecken.

13. Elektromotor nach mindestens einem der vorangegangenen Ansprüche,
**dadurch gekennzeichnet, dass**
die Welle über eine Adapterwelle (7), mit welcher sie drehfest verbunden ist, mit der Rotorwelle drehfest verbunden ist,
wobei die Befestigungslaschen (15) am weiteren Gehäuseteil, also Adaptergehäuse (3), schraubverbunden sind.

## Claims

1. An electric motor having a fan cowl and a sensor,
wherein the sensor has a shaft and a sensor housing (2),
wherein the fan cowl has cutouts,
wherein the shaft of the sensor is connected in a rotationally-fixed manner to the rotor shaft of the electric motor,
wherein a torque support part (1) has a securing lug (15) connected, in particular screw-connected, to the sensor housing (2) or to a further housing part screw-connected to the latter, in particular an adaptor housing (3),
wherein the torque support part (1) has a strip portion (14) which at its first end region is connected to the securing lug (15) and at its other end region is connected to a deformation portion (13),
**characterised in that**
the torque support part (1) has a reinforcing ring (10) to which a further strip portion (11) is connected with its first end region, wherein at least one lug (12) is arranged on the further strip portion (11) and the further strip portion (11) is likewise connected at its other end region to the deformation portion (13),
wherein the sensor housing (2) or the further housing part (3) projects through the annular hole of the reinforcing ring (10),
- wherein the deformation portion (13), in particular in the mounted state, is elastically deformed such that an axially directed, elastic force presses the lug (12) into the cut-outs,
- and/or wherein the radial spacing of the securing lug (15), in particular the radial spacing from the reinforcing ring axis, before mounting of the torque support part (1) differs from the radial spacing of the securing lug (15) in the mounted state of the torque support part (1), so that an axially directed, elastic force presses the lug (12) into the cut-outs in the mounted state of the torque support part (1).

2. An electric motor according to claim 1,
**characterised in that**
the cut-outs of the fan cowl form a grating, in particular therefore a fan cowl grating, in particular wherein the fan cowl grating enables the air supply to a fan which is surrounded by the fan cowl and is connected to the rotor shaft of the motor in a rotationally-fixed manner, wherein the grating is arranged in a plane manner, in particular at a single, axial position, and/or extends in a radial direction and in a circumferential direction.

3. An electric motor according to at least one of the preceding claims,
**characterised in that**
the shaft of the sensor is connected to the rotor shaft by means of a screw arranged centrally in relation to the rotor shaft axis and/or by means of an expanding shaft connection.

4. An electric motor according to at least one of the preceding claims,
**characterised in that**
the reinforcing ring axis is parallel to the rotor shaft axis in the mounted state.

5. An electric motor according to at least one of the preceding claims,
**characterised in that**
at least one region of a damping part (5) is arranged between the strip portion (14) and the further strip portion (11), in particular wherein the region contacts the strip portion (14) and the further strip portion (11), in particular wherein the region is conical or in the form of a convex portion of a body of rotation.

6. An electric motor according to claim 5,
**characterised in that**
the damping part (5) has a portion which is at least partially pressed into a cut-out of the fan cowl, in particular into a grating opening of the fan cowl grating, by the further strip portion (11), in particular wherein the portion is conical or in the form of a convex portion of a body of rotation.

7. An electric motor according to at least one of the preceding claims,
**characterised in that**
the torque support part (1) is manufactured as a stamped and bent part, in particular from sheet metal, in particular aluminium sheet or steel sheet.

8. An electric motor according to at least one of the preceding claims,
**characterised in that**
two or more further strip portions are connected to the reinforcing ring (10), which strip portions are connected via a respective deformation portion (13) to a respective strip portion which is connected to a securing lug (15) which is screw-connected to the sensor housing (2) or to the further housing part, wherein each of the further strip portions has in each case at least one lug (12) which is pressed into a respective cut-out by the elastic deformation of the deformation portion (13), in particular wherein a respective damping part (5) is arranged between each of the further strip portions and the strip portion accordingly connected via the respective deformation portion (13).

9. An electric motor according to claim 8,
**characterised in that**
at least one region of the respective damping part (5) is arranged between the respective strip portion (14) and the respective further strip portion (11), in particular wherein the region contacts the strip portion (14) and the further strip portion (11), in particular wherein the region is conical or in the form of a convex portion of a body of rotation.

10. An electric motor according to claim 9 or 8,
**characterised in that**
the respective damping part (5) is arranged at a smaller radial spacing than the deformation portion (13).

11. An electric motor according to at least one of the preceding claims,
**characterised in that**
the respective deformation portion (13) is curved in an axial and radial direction, in particular is curved in an arc of a circle, in particular is C-shaped.

12. An electric motor according to at least one of the preceding claims,
**characterised in that**
the respective strip portion (14) and the respective further strip portion (11) are axially spaced apart from one another, in particular wherein both extend in each case radially and in a circumferential direction.

13. An electric motor according to at least one of the preceding claims,
**characterised in that**
the shaft is connected in a rotationally-fixed manner to the rotor shaft via an adapter shaft (7) with which it is connected in a rotationally-fixed manner, wherein the securing lugs (15) are screw-connected to the further housing part, therefore adapter housing (3).

## Revendications

1. Moteur électrique, comprenant un capot de ventilateur et un capteur,
le capteur présentant un arbre et un boîtier de capteur (2),
le capot de ventilateur présentant des évidements,
l'arbre du capteur étant relié de manière solidaire en rotation à l'arbre de rotor du moteur électrique,
dans lequel un élément de support de couple (1) présente une patte de fixation (15) qui est reliée, en particulier par des vis, au boîtier de capteur (2) ou à une autre partie de boîtier reliée par des vis à celui-ci, en particulier à un boîtier d'adaptateur (3),
l'élément de support de couple (1) présentant un segment de bande (14) qui est relié par sa première zone d'extrémité à la patte de fixation (15) et est relié par son autre zone d'extrémité à un segment de déformation (13),
**caractérisé en ce que** l'élément de support de couple (1) présente un anneau raidisseur (10) auquel un autre segment de bande (11) est relié par sa première zone d'extrémité, au moins une patte (12) étant disposée sur l'autre segment de bande (11), et l'autre segment de bande (11) étant également relié au segment de déformation (13) par son autre zone d'extrémité,
le boîtier de capteur (2) ou l'autre partie de boîtier (3) faisant saillie à travers le trou annulaire de l'anneau raidisseur (10),
- dans lequel le segment de déformation (13), en particulier à l'état monté, est déformé élastiquement de telle sorte qu'une force élastique dirigée axialement enfonce la patte (12) dans les évidements,
- et/ou dans lequel, avant le montage de l'élément de support de couple (1), la distance radiale de la patte de fixation (15), en particulier la distance radiale par rapport à l'axe d'anneau raidisseur est différente de la distance radiale de la patte de fixation (15) à l'état monté de l'élément de support de couple (1), de sorte qu'à l'état monté de l'élément de support de couple (1), une force élastique dirigée axialement enfonce la patte (12) dans les évidements.

2. Moteur électrique selon la revendication 1, **caractérisé en ce que** les évidements du capot de ventilateur constituent une grille, donc en particulier une grille de capot de ventilateur,
la grille de capot de ventilateur permettant en particulier l'arrivée d'air jusqu'à un ventilateur relié de manière solidaire en rotation à l'arbre de rotor du moteur et entouré par le capot de ventilateur,
la grille étant disposée de manière plane, en particulier dans une position axiale unique et/ou s'étendant dans la direction radiale et dans la direction circonférentielle.

3. Moteur électrique selon au moins l'une des revendications précédentes, **caractérisé en ce que** l'arbre du capteur est relié à l'arbre de rotor au moyen d'une vis disposée au centre par rapport à l'axe d'arbre de rotor et/ou au moyen d'un assemblage par arbre expansible.

4. Moteur électrique selon au moins l'une des revendications précédentes, **caractérisé en ce qu'**à l'état monté, l'axe d'anneau raidisseur est parallèle à l'axe d'arbre de rotor.

5. Moteur électrique selon au moins l'une des revendications précédentes, **caractérisé en ce qu'**au moins une zone d'un élément d'amortissement (5) est disposée entre le segment de bande (14) et l'autre segment de bande (11), en particulier dans lequel la zone touche le segment de bande (14) et l'autre segment de bande (11), la zone étant en particulier réalisée de manière conique ou sous forme de partie de corps de révolution convexe.

6. Moteur électrique selon la revendication 5, **caractérisé en ce que** l'élément d'amortissement (5) présente une partie qui est enfoncée au moins partiellement dans un évidement du capot de ventilateur par l'autre segment de bande (11), en particulier dans une ouverture de grille de la grille de capot de ventilateur, la partie étant en particulier réalisée de manière conique ou sous forme de partie de corps de révolution convexe.

7. Moteur électrique selon au moins l'une des revendications précédentes, **caractérisé en ce que** l'élément de support de couple (1) est fabriqué sous forme de pièce pliée estampée, en particulier en tôle métallique, en particulier en tôle d'aluminium ou tôle d'acier.

8. Moteur électrique selon au moins l'une des revendications précédentes, **caractérisé en ce que** sur l'anneau raidisseur (10), deux ou plusieurs autres segments de bande sont reliés qui sont reliés par l'intermédiaire d'un segment de déformation (13) respectif à un segment de bande respectif qui est relié à une patte de fixation (15) qui est reliée par des vis au boîtier de capteur (2) ou à l'autre partie de boîtier,
chacun des autres segments de bande présentant respectivement au moins une patte (12) qui est enfoncée dans un évidement respectif par la déformation élastique du segment de déformation (13),
en particulier dans lequel une partie d'amortissement (5) respective est disposée entre chacun des autres segments de bande et le segment de bande relié de manière correspondante par l'intermédiaire du segment de déformation (13) respectif.

9. Moteur électrique selon la revendication 8, **caractérisé en ce qu'**au moins une zone de l'élément d'amortissement (5) respectif est disposée entre le segment de bande (14) respectif et l'autre segment de bande (11) respectif ;
en particulier dans lequel la zone du segment de bande (14) touche l'autre segment de bande (11),
la zone étant en particulier réalisée de manière conique ou sous forme de partie de corps de révolution convexe.

10. Moteur électrique selon la revendication 9 ou 8, **caractérisé en ce que** l'élément d'amortissement (5) respectif est disposé à une distance radiale inférieure à celle du segment de déformation (13).

11. Moteur électrique selon au moins l'une des revendications précédentes, **caractérisé en ce que** le segment de déformation (13) respectif est réalisé de manière courbe dans la direction axiale et radiale, en particulier en forme d'arc de cercle, en particulier en forme de C.

12. Moteur électrique selon au moins l'une des revendications précédentes, **caractérisé en ce que** le segment de bande (14) respectif et l'autre segment de bande (11) respectif sont axialement espacés l'un de l'autre, en particulier dans lequel les deux s'étendent respectivement radialement et dans la direction circonférentielle.

13. Moteur électrique selon au moins l'une des revendications précédentes, **caractérisé en ce que** l'arbre est relié de manière solidaire en rotation à l'arbre de rotor par l'intermédiaire d'un arbre d'adaptateur (7) auquel il est relié de manière solidaire en rotation, dans lequel les pattes de fixation (15) sont reliées par des vis à l'autre partie de boîtier, c'est-à-dire au boîtier d'adaptateur (3).
